# EUROPEAN PATENT APPLICATION

(11) **EP 4 303 497 A1**
(43) Date of publication of application: **10.01.2024**
(21) Application number: 23184105.7
(22) Date of filing: 07.07.2023
(51) Int. Cl.: F24D 19/10, F24F 11/46, F24F 11/70, F24H 15/156, F24H 15/215, F24H 15/219, F24H 15/254, F24H 15/258, G05D 23/19, F24F 110/10, F24F 110/12, F24F 140/20

(54) **ARRANGEMENT FOR TUNING A CONTROL ARRANGEMENT**

(30) Priority: 07.07.2022 SE 2250860
(71) Applicant: Nrlyze AB, 146 40 Tullinge (SE)
(72) Inventor: HANSSON, Lars, Tullinge (SE)
(74) Representative: Ehrner & Delmar Patentbyrå AB

(57) **Abstract**

The invention relates to an arrangement (100) for determining control parameters fro a control arrangement (200) configured to control a heating and/or a cooling system (400) of a building (300), the system (400) comprising a fluid source (410) coupled to a radiator (420) via a fluid feed system (430) and a fluid return system (440), the radiator (420) being arranged in a room (310) of the building (300); and wherein the arrangement (100) is configured to: determine a set of control parameters (C₁) based on a set of outdoor temperatures of the building (300), a set of indoor temperatures of the room (310), a set of fluid feed temperatures of the fluid feed system (430), and a set of desired indoor temperatures for a first time period (T1). Furthermore, the invention also relates to a corresponding method and a computer program.

## Description

### Technical Field

Embodiments of the invention relates to an arrangement for tuning a control arrangement configured to control a heating and/or a cooling system of a building. Furthermore, the invention also relates to a corresponding method and a computer program.

### Background

Heating and cooling systems are used in buildings for controlling the indoor temperature of a room. Examples of heat systems are water or air carried heat systems based on furnaces, boilers, and heat pumps.

The heating/cooling system aims at providing a desired indoor temperature by delivering heat or cold depending on application. The heating system and cooling system may be combined or separated in different systems.

### Summary

An objective of embodiments of the invention is to provide a solution which mitigates or solves the drawbacks and problems of conventional solutions.

Another objective of embodiments of the invention is to provide a solution which reduces the energy consumption for heating or cooling a building.

The above and further objectives are solved by the subject matter of the independent claims. Further embodiments of the invention can be found in the dependent claims.

According to a first aspect of the invention, the above mentioned and other objectives are achieved with an arrangement for determining control parameters for a control arrangement configured to control a heating and/or a cooling system of a building, the system comprising a fluid source coupled to a radiator via a fluid feed system and a fluid return system, the radiator being arranged in a room of the building; and wherein the arrangement is configured to:
determine a set of control parameters based on a set of outdoor temperatures of the building, a set of indoor temperatures of the room, a set of fluid feed temperatures of the fluid feed system, and a set of desired indoor temperatures for a first time period.

The heating and/or a cooling system of a building may be a heating system only, a cooling system only or a combination thereof.

An advantage of the arrangement according to the first aspect is that fluid feed temperatures can directly or indirectly be controlled by the control parameters determined according to embodiments of the invention. Thereby, the energy consumption of the heating/cooling system when heating or cooling the room of the building can be reduced.

In an implementation form of an arrangement according to the first aspect, the control arrangement is configured to control the system based on control parameters mapping outdoor temperatures to fluid feed temperatures of the fluid feed system.

In an implementation form of an arrangement according to the first aspect, the arrangement is configured to
provide the set of control parameters to a presentation device, and/or
provide the set of control parameters to the control arrangement, and/or
control the control arrangement based on the set of control parameters.

In an implementation form of an arrangement according to the first aspect, the arrangement is configured to
determine the set of control parameters further based on a set of predetermined control parameters for the control arrangement.

An advantage with this implementation form is that the set of control parameters may be optimized in respect of energy consumption by also considering the set of predetermined control parameters of an existing control system.

In an implementation form of an arrangement according to the first aspect, the arrangement is configured to
receive the set of predetermined control parameters via a communication interface; and/or
estimate the set of predetermined control parameters based on sets of sensor data.

The predetermined control parameters may be estimated if not available.

In an implementation form of an arrangement according to the first aspect, the set of desired indoor temperatures is based on the set of outdoor temperatures.

An advantage with this implementation form is that the energy consumption of the heating/cooling system can be further reduced since the desired indoor temperature can be adapted to different outdoor temperatures.

In an implementation form of an arrangement according to the first aspect, the arrangement is configured to
obtain sets of sensor data associated with the set of outdoor temperatures, the set of indoor temperatures, and the set of fluid feed temperatures, respectively, for the first time period; and
obtain the set of outdoor temperatures, the set of indoor temperatures, and the set of fluid feed temperatures for the first time period based on the set of sensor data.

In an implementation form of an arrangement according to the first aspect, the arrangement is configured to
filter the sets of sensor data to obtain the set of outdoor temperatures, the set of indoor temperatures, and the set of fluid feed temperatures for the first time period.

In an implementation form of an arrangement according to the first aspect, the arrangement being configured to
discard sensor data in the sets of sensor data when a temperature derivate of the sensor data exceeds a temperature derivate threshold value.

Thereby, the set of control parameters can be further improved by discarding sensor data having temperature derivate over the threshold value since such sensor data may distort the computation of the control parameters.

In an implementation form of an arrangement according to the first aspect, the temperature derivate threshold value is dependent on a time constant of the heating and/or cooling system and/or a time constant of the building.

An advantage with this implementation form is that the threshold value can be derived more accurately by considering the time constant of the heating/cooling system and/or the time constant of the building.

In an implementation form of an arrangement according to the first aspect, the set of outdoor temperatures comprises outdoor temperatures in the group comprising: -5 to 15 degrees C, 0 to 10 degrees C, and 0 to 7 to degrees C.

An advantage with this implementation form is that these outdoor temperature ranges represent more significant outdoor temperatures when determining the set of control parameters.

In an implementation form of an arrangement according to the first aspect, the arrangement is configured to
arrange the sets of sensor data according to outdoor temperature ranges based on the amount of sensor data in the sets of sensor data.

An advantage with this implementation form is that huge amount of data can be structured in relation to outdoor temperature ranges.

In an implementation form of an arrangement according to the first aspect, the outdoor temperature ranges are any of 4K or 2K or 1K.

In an implementation form of an arrangement according to the first aspect, the arrangement is configured to
obtain a set of fluid return temperatures of the fluid return system for the first time period; and
determine the set of control parameters further based on the set of fluid return temperatures for the first time period.

By considering the set of fluid return temperatures of the fluid return system the thermal characteristics of the heating/cooling system can implicitly be derived. Such information may be used for determining improved control parameters in respect of energy consumption.

In an implementation form of an arrangement according to the first aspect, the arrangement is configured to
determine the set of control parameters based on a difference between the set of fluid feed temperatures and the set of fluid return temperatures.

By considering the difference between the set of fluid feed temperatures and the set of fluid return temperatures, the information about the thermal characteristics of the heating/cooling system can be derived even more accurately.

In an implementation form of an arrangement according to the first aspect, the arrangement is configured to
determine a set of updated control parameters based on a set of outdoor temperatures, a set of indoor temperatures, a set of fluid feed temperatures, and a set of desired indoor temperatures for a second time period.

Thereby, an updating mechanism is provided for updating the control parameters for reduced energy consumption.

In an implementation form of an arrangement according to the first aspect, the first time period and/or the second time period is a time period longer than 1 week or 2 weeks or 4 weeks.

In an implementation form of an arrangement according to the first aspect, the arrangement is configured to
determine the set of updated control parameters for the second time period further based on the set of control parameters for the first time period.

Thereby, an iterative algorithm is provided for tuning the control parameters for even more reduced energy consumption of the heating/cooling system.

In an implementation form of an arrangement according to the first aspect, the determining of the set of updated control parameters comprises correcting the fluid feed temperatures in the set of control parameters based on observed fluid feed temperatures during the first time period and a correction function, wherein the correction function is based on the sets of sensor data obtained during the first time period.

An advantage with this implementation form is that improved control parameters may be provided in respect of energy consumption by using the correction function. Also, faster convergence of the control parameters to optimal control parameters is possible.

According to a second aspect of the invention, the above mentioned and other objectives are achieved with a method for determining control parameters for a control arrangement configured to control a heating and/or a cooling system of a building, the system comprising a fluid source coupled to a radiator via a fluid feed system and a fluid return system, the radiator being arranged in a room of the building; and wherein the method comprises:
determining a set of control parameters based on a set of outdoor temperatures of the building, a set of indoor temperatures of the room, a set of fluid feed temperatures of the fluid feed system, and a set of desired indoor temperatures for a first time period.

The method according to the second aspect can be extended into implementation forms corresponding to the implementation forms of the arrangement according to the first aspect. Hence, an implementation form of the method comprises the feature(s) of the corresponding implementation form of the arrangement.

The advantages of the methods according to the third aspect are the same as those for the corresponding implementation forms of the arrangement according to the first aspect.

According to a third aspect of the invention, the above mentioned and other objectives are achieved with a computer program with a program code for performing a method according to embodiments of the invention when the computer program runs on a computer.

Embodiments of the invention also relates to a computer program, characterized in program code, which when run by at least one processor causes the at least one processor to execute any method according to embodiments of the invention. Further, embodiments of the invention also relate to a computer program product comprising a computer readable medium and the mentioned computer program, wherein the computer program is included in the computer readable medium, and may comprises one or more from the group of: read-only memory (ROM), programmable ROM (PROM), erasable PROM (EPROM), flash memory, electrically erasable PROM (EEPROM), hard disk drive, etc.

Further applications and advantages of embodiments of the invention will be apparent from the following detailed description.

### Brief Description of the Drawings

The appended drawings are intended to clarify and explain different embodiments of the invention, in which:
- Fig. 1 shows an arrangement according to an embodiment of the invention;
- Fig. 2 shows a flow chart of a method for an arrangement according to an embodiment of the invention;
- Fig. 3 illustrates control parameters forming a control curve;
- Fig. 4 illustrates an updating mechanism according to an embodiment of the invention;
- Fig. 5 illustrates collection of sensor data according to an embodiment of the invention; and
- Fig. 6 shows processing of sensor data according to an embodiment of the invention.

### Detailed Description

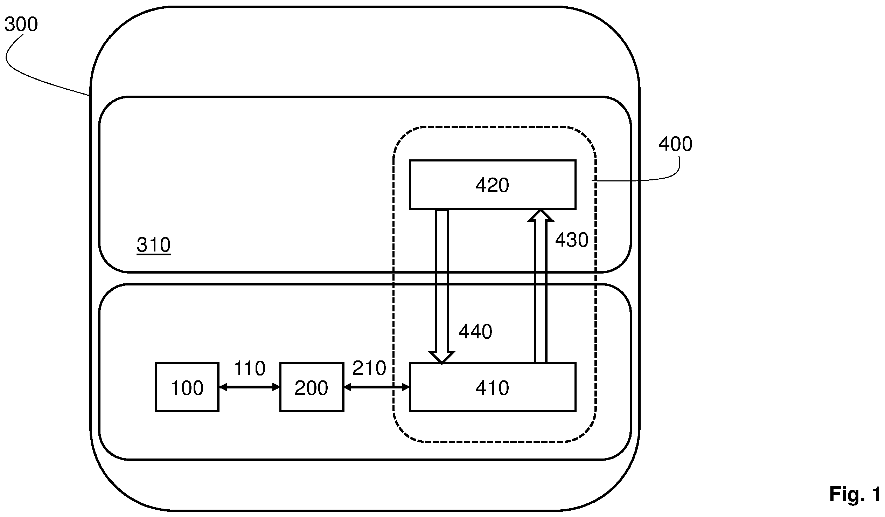

Fig. 1 shows an arrangement 100 for tuning a control arrangement 200 according to an embodiment of the invention. The control arrangement 200 is configured to control a heating and/or a cooling system 400 of a building 300. The heating and the cooling may be separate arrangements of the system 400 or be set up as a combined heating and cooling arrangement.

The system 400 comprises a fluid source 410 coupled to a radiator 420 via a fluid feed system 430 and a fluid return system 440. The radiator 420 is arranged in a room 310 of the building 300. The control arrangement 200 is in embodiments of the invention configured to control the system 400 based on control parameters mapping outdoor temperatures to fluid feed temperatures of the fluid feed system 430. The arrangement 100 is configured to determine a set of control parameters C₁ based on a set of outdoor temperatures of the building 300, a set of indoor temperatures of the room 310, a set of fluid feed temperatures of the fluid feed system 430, and a set of desired indoor temperatures for a first time period T1.

The arrangement 100 is in embodiments of the invention configured to at least one of:
- Provide the set of control parameters C₁ to a presentation device. This embodiment means that the set of control parameters C₁ may be provided to a person operating the control arrangement 200. Thus, the presentation device may be any suitable device such as a display, audio output, etc.
- Provide the set of control parameters C₁ to the control arrangement 200. Thus, the control arrangement 200 can control the system 400 based on the provided set of control parameters C₁. For this a suitable communication interface or API may be used in the transfer of control parameters from the arrangement 100 to the control arrangement 200.
- Control the control arrangement 200 based on the set of control parameters C₁. Thus, the arrangement 100 can directly control the control arrangement 200. This may in an example be achieved by manipulating the control arrangement 200 e.g., by manipulating the input interface to the control arrangement 200.

The control arrangement 200 may in embodiments of the invention be an existing control arrangement for controlling the heat and/or the cooling of a building 300 using mentioned control parameters. Such an existing control arrangement 200 may be a so-called feed forward system. The present arrangement 100 may be a standalone arrangement, or fully or partially integrated with the existing control arrangement 200. In the latter cases the arrangement 100 may share one or more means, components, units, etc. with the existing control arrangement 200. The non-limiting example in Fig. 1 illustrates the arrangement 100 as a stand-alone arrangement hence the communication interface 110 arranged between the arrangement 100 and the control arrangement 200. The latter being coupled to, and having the means, such as actuators and mechanical thermostats, for controlling the fluid source 410 or the fluid feed system 430 and therefore the fluid feed temperature of the heating/cooling system 400.

The set of control parameters C₁ may be provided to the existing control arrangement 200, which may use or consider the control parameters C₁ for controlling the heating/cooling system 400. The set of control parameters C₁ may be provided over the communication interface 110. However, in other examples of the invention, the arrangement 100 may directly control the control arrangement 200 by replacing existing control parameters with the set of control parameters C₁ determined by the present arrangement 100. In yet further examples of the invention, the set of control parameters C₁ may be presented to a person such as a genitor responsible for the heating/cooling system 400 of the building. For example, the set of control parameters C₁ being visualized on a monitor screen. The person can therefore tune the heating/cooling system 400 manually if that is possible.

It may be noted that the heating/cooling system 400 may comprise any number of radiators 420 in different configurations in the room 310. Mentioned radiators 420 are connected to the fluid source 410 via the fluid feed system 430 and the fluid return system 440, such as a feed duct system and a return duct system, having suitable dimensions and functionality. The fluid may be in gas form or liquid form, such as water. The fluid source 410 may in examples be a device which generates heated or cooled fluid which is fed to the radiators 420 via the fluid feed system 430. However, in other examples, the fluid source 410 may itself be connected to an external heating or cooling source generating and providing the heated or cooled fluid such as a central heating/cooling system connecting a plurality of buildings (not shown in the Figs.).

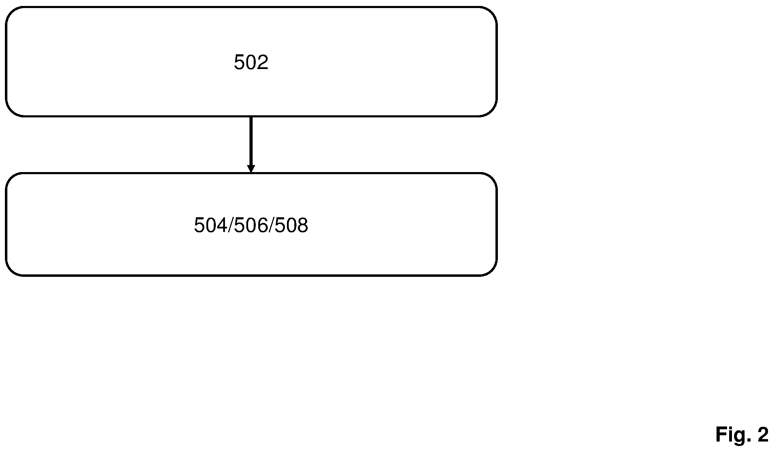

Fig. 2 shows a flow chart of a corresponding method 500 for an arrangement 100 for tuning a control arrangement 200 according to an embodiment of the invention. The control arrangement 200 is in embodiments of the invention configured to control a heating and/or a cooling system 400 of a building 300, such as the one shown in Fig. 1. The method 500 comprises determining 502 a set of control parameters C₁ based on a set of outdoor temperatures of the building 300, a set of indoor temperatures of the room 310, a set of fluid feed temperatures of the fluid feed system 430, and a set of desired indoor temperatures for a first time period T1.

The method 500 further comprises in embodiments of the invention any of the steps of: providing 504 the set of control parameters C₁ to a presentation device, and/or providing 506 the set of control parameters C₁ to the control arrangement 200, and/or controlling 508 the control arrangement 200 based on the set of control parameters C₁.

In embodiments of the invention, the arrangement 100 determines the set of control parameters C₁ further based on a set of predetermined control parameters C_{P} for the control arrangement 200. This is especially true when the control arrangement 200 is an existing control arrangement 200 which commonly uses predetermined control tables or predetermined so-called control curves for controlling the fluid feed temperature. In such conventional systems, the existing control arrangement 200 automatically maps an outdoor temperature to a fluid feed temperature derived from such control tables or control curves. By analysing the predetermined control parameters C_{P} information about how the set of control parameters C₁ should be determined for reduced energy consumption of the heating/cooling system 400 can be derived. This may e.g., relate to how the predetermined control parameters C_{P} should be corrected so as to compute the set of control parameters C₁ for optimal performance and energy reduction.

The predetermined control parameters C_{P} may be received or obtained by the arrangement 100 via a communication interface 110 from the control arrangement 200 as shown in Fig. 1. If that is not possible, the arrangement 100 may have the capability to estimate the set of predetermined control parameters C_{P} based on sets of sensor data obtained from different sensors. For example, the predetermined control parameters C_{P} may be estimated based on fluid feed temperatures and fluid return temperatures for different outdoor temperatures. It should however be noted that it is not excluded that the estimated predetermined control parameters C_{P} may also be compared with actual predetermined control parameters C_{P} in cases when both estimated and actual predetermined control parameters are available for improved energy reduction.

In yet further embodiments of the invention, the fluid return temperatures of the fluid return system 440 are also considered when determining the control parameters C₁. In other words, the arrangement 100 may be configured to obtain a set of fluid return temperatures of the fluid return system 440 for the first time period T1, and to determine the set of control parameters C₁ further based on the set of fluid return temperatures for the first time period T1. The set of fluid return temperatures may be given or derived from one or more temperature sensors providing the fluid return temperatures. By comparing the fluid feed temperatures and fluid return temperatures information about the thermal characteristic of the heating/cooling system 400 can be derived. This information is used for determining the set of control parameters C₁ for improved performance.

In examples of the invention, the set of control parameters C₁ is further determined based on a difference between the set of fluid feed temperatures and the set of fluid return temperatures. Mentioned difference provides even more relevant information about the thermal characteristic of the heating/cooling system 400. The difference can be determined as a specific function of the outdoor temperature when the fluid feed temperature is correct, hence that the heating/cooling system 400 works properly. For example, if the difference (or delta) is deviating from what is expected based on the specific determined function it may be derived that the heating/cooling system 400 is not function properly and therefore the set of control parameters should be adapted accordingly.

The desired indoor temperature is the indoor temperature which the heating/cooling system 400 try to reach. Therefore, according to embodiments of the invention, the set of desired indoor temperatures is based on or dependent on the set of outdoor temperatures. This may be understood as that the desired indoor temperature may be different for different outdoor temperatures. For example, the desired indoor temperature may be 22 degrees C for an outdoor temperature of 10 degrees C, but 20 degrees C for outdoor temperature of 0 degrees C. Thereby, the desired indoor temperature may be adapted to the outdoor temperature for reduced energy consumption.

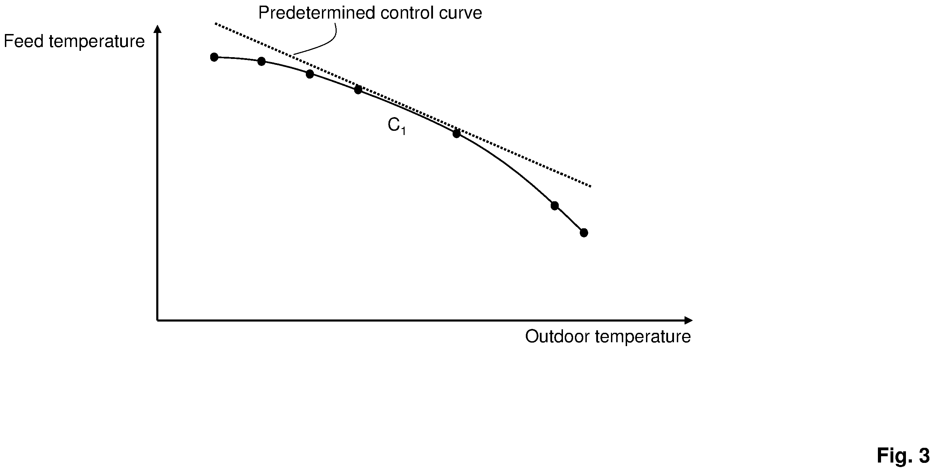

Fig. 3 illustrates the case when the set of control parameters C₁ form a control curve. The x-axis shows the outdoor temperature and the y-axis shows the feed temperature. The control curve may be derived by interpolation of a plurality of control parameters C₁. Fig. 3 also shows a predetermined control curve, as a dotted curve, which is used by an existing control arrangement 200 for controlling the heat/cold in the room 310. It is noted that the predetermined control curve deviates from the control curve according to embodiments of the invention. This deviation also illustrates the energy reduction that may be achieved if the predetermined control curve is replaced with the control curve determined according to embodiments of the invention.

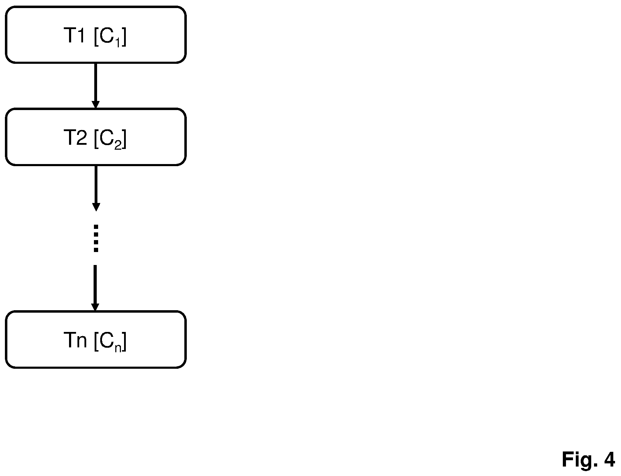

Fig. 4 illustrates an iterative updating mechanism according to embodiments of the invention. To improve the tuning of the heating/cooling system 400 when determining a set of updated control parameters for a certain time period, the set of control parameters for previous time periods may be considered. Hence, the set of updated control parameters C₂ for a second time period T2 are also dependent on the set of control parameters C₁ for the first time period T1.

In more general terms, during the first time period T1 in Fig. 4, a set of control parameters are determined as previously described. During a second time period T2 in Fig. 4 following the first time period T1, a set of updated control parameters C₂ are determined based on a set of outdoor temperatures, a set of indoor temperatures, a set of fluid feed temperatures, and a set of desired indoor temperatures for the second time period T2 which may be provided to the control arrangement 200, and/or used for directly tuning the control arrangement 200. This procedure may continue in an iterative manner as long as needed so as to optimize/tune the control parameters to the thermal characteristics of the heating/cooling system 400 and the building 300. This is illustrated in Fig. 4 in which during a *n-th* time period Tn, the arrangement 100 outputs a set of control parameters Cₙ for the n-*th* time period Tn.

The iterative updating mechanism may also involve the correction of previous control parameters by the arrangement 100. The previous control parameters may be the mentioned predetermined control parameters or previously determined control parameters. An error may be calculated as a difference between a desired indoor temperature and a response temperature of the room which is the actual outcome. Hence, the error may be a so-called overshoot value or undershoot value. Further, any remaining errors from previously determined control parameters may be added so as to derive a total error value which may be used to scale and correct the previously determined control parameters. Thereby, the actual temperature response will for each iterative step getting closer to the desired temperature in the present iterative control algorithm. The correction may in general terms be expressed such that the determining of the set of updated control parameters C₂ for the second timer period T2 comprises correcting the fluid feed temperatures in the set of control previous parameters C₁ based on observed fluid feed temperatures during the first time period T1 and a correction function. The observed fluid feed temperatures may be related to a specific outdoor temperature range for a certain time period. The correction function may be derived from sets of sensor data obtained during the first time period T1. The correction function may also involve scaling the error with scaling-factors that are continuously updated based on previous behaviours of the system.

The time periods T1, T2,..., Tn, herein discussed and considered are long term time periods so as to make it possible for the present algorithm to collect data and adapt the control parameters to the thermal characteristics of the building. In order to get accuracy and confidence in the derived control parameters, it need to be based on a satisfying amount of outdoor temperature occurrences over a minimum temperature span. In this respect, the time periods are often weeks or months. Thus, in embodiments of the invention the first time period T1 and/or the second time period T2 is longer than 1 week, or longer than 2 weeks or longer than 4 weeks.

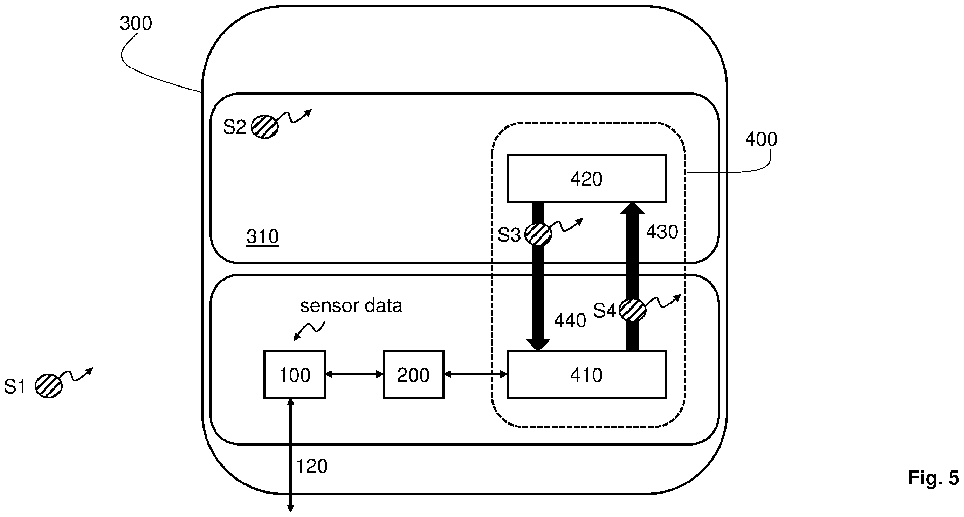

Fig. 5 illustrates the collection and processing of sensor data and other relevant data according to embodiments of the invention. In this respect multiple sensors may be arranged to provide relevant sensor data to be processed by the arrangement 100. The sensors may be any suitable sensors known in the art. The processing of the sensor data may involve any statistical methods. Further, if sensor data is missing for a time period interpolation techniques may be applied for deriving information about the missing time periods.

The present sensors may use wireless and/or wired communication interfaces with the arrangement 100 depending on the application for providing its data. The communication of sensor data may be performed according to conventional communication protocols known in the art defined according to communication standards such as WiFi or 3GPP systems including 4G and 5G. The first type of sensors S1 provides outdoor temperature. It may however be noted that data about the outdoor temperature from external sources such as web sites, etc. may be used if the first type of sensor is not available or if additional data is considered. The second type of sensors S2 provides indoor temperatures, or more specifically the temperature in the room 310. The third type of sensors S3 provides the fluid feed temperature. Other information and sensor data may also be used for determining the set of control parameters C₁. In non-limiting examples, such data and information may be obtained via a communication interface 120 from data/information sources such as remote data bases, web pages, etc.

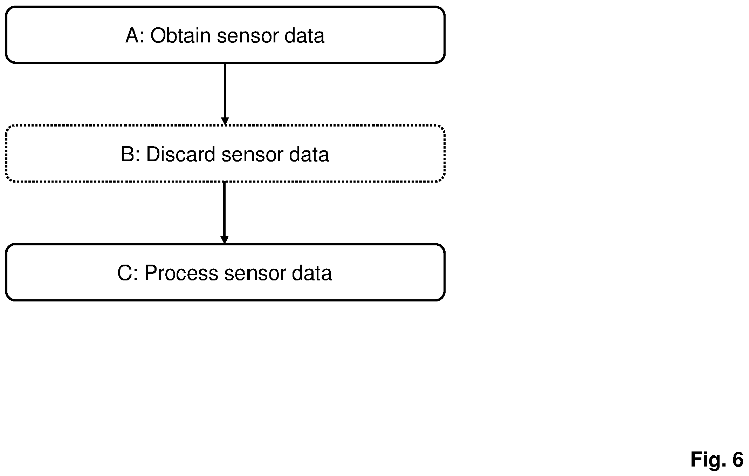

Fig. 6 shows the processing of the sensor data according to embodiments of the invention. In the general case, at step A in Fig. 6, the arrangement 100 obtains sets of sensor data associated with the set of outdoor temperatures, the set of indoor temperatures, and the set of fluid feed temperatures, respectively, for a certain time period T1, T2,..., Tn. Thereafter, at step C in Fig. 6, the sets of sensor data are processed so as to obtain the set of outdoor temperatures, the set of indoor temperatures, and the set of fluid feed temperatures for determining the control parameters C₁.

It has however been noted that for improved performance the sensor data may be filtered or so called washed so as to remove sensor data not relevant for determining the control parameters C₁. For example, if the change in the indoor temperature of the room 310 is very fast it may be presumed that a situation has occurred which only have a short-term impact on the indoor temperature and therefore does not give a good measure of the thermal characteristics of the building 300 or the heating/cooling system 400. All temperature changes in the room 310 that are not the result of the heating/cooling system 400 itself can be removed or discarded when determining the set of control parameters. This may e.g., happen for a temporary crowded room, sunshine radiating into the room, heating from other heating sources such as kitchen oven, and cooling from other cooling sources such as an open window or general wind conditions for the building.

Therefore, in further embodiments of the invention, at the optional step B in Fig. 6, sensor data in the sets of sensor data are discarded or not considered when or if a temperature derivate of the sensor data exceeds a temperature derivate threshold value. The temperature derivate threshold value may in examples of the invention be dependent on a time constant of the heating system 400 and/or a time constant of the building 300 for improved accuracy. The time constant of the heating system 400 may be considered as the thermal inertia of the heating system 400 itself. The time constant of the building 300 is correspondingly the thermal inertia of the building 300 itself. It would also be possible to use multiple threshold values thereby grading the sensor data with different weights when computing the set of control parameters. This may further optimize the present algorithm when determining the set of control parameters. It may also be noted that the temperature derivate threshold value may be considered together with an associated time period value. Thus, the arrangement may be considered to discard sensor data based on the temperature derivate threshold value and an associated time period value. The associated time period value may be to a time period in which the temperature derivate has exceeded the temperature derivate threshold value. The time period value may be larger than 2, 4, 6 or 8 hours.

For improved performance of the heating/cooling system 400, the sensor data may be arranged according to different outdoor temperature ranges for the ordering of the sensor data. Thus, the sets of sensor data may be arranged according to outdoor temperature ranges which in turn may be based on the amount of sensor data in the sets of sensor data. Hence, the size of the outdoor temperature range may be determined by or based on the amount of sensor data. It has been empirically derived that the following outdoor temperature ranges works well within the present algorithm, i.e., the ranges 4K, 2K, and 1K or with the corresponding ranges in Celsius. Thus, since the set of outdoor temperatures, the set of indoor temperatures, and the set of fluid feed temperatures for determining the control parameters may be dependent on sets of sensor data, filtered sensor data will determine the values of the control parameters according to embodiments of the invention.

A yet further insight is that some outdoor temperatures are more important than other outdoor temperatures when determining the set of control parameters for reducing the energy consumption. This may be understood such that some outdoor temperatures are more significant when computing the set of control parameters than other outdoor temperatures. Therefore, the sensor data for the set of outdoor temperatures should at least comprise outdoor temperatures in the group comprising temperature ranges: -5 to 15 degrees C, or preferably 0 to 10 degrees C, or even more preferably 0 to 7 to degrees C.

In a non-limiting example, the arrangement 100 may comprise a processor, a transceiver and a memory. The processor may be coupled to the transceiver and the memory by communication means known in the art. The processor may be referred to as one or more general-purpose CPU, one or more digital signal processor (DSP), one or more application-specific integrated circuit (ASIC), one or more field programmable gate array (FPGA), one or more programmable logic device, one or more discrete gate, one or more transistor logic device, one or more discrete hardware component, or one or more chipsets. The memory may be a read-only memory, a random access memory (RAM), or a non-volatile RAM (NVRAM). The transceiver may be a transceiver circuit, a power controller, or an interface providing capability to communicate with other communication modules or communication devices. The transceiver, memory and/or processor may be implemented in separate chipsets or may be implemented in a common chipset.

Moreover, it should be realized that the arrangement 100 comprises the necessary capabilities in the form of e.g., functions, means, units, elements, etc., for performing or implementing embodiments of the invention. Examples of other such means, units, elements and functions are: processors, memory, buffers, control logic, encoders, decoders, rate matchers, de-rate matchers, mapping units, multipliers, decision units, selecting units, switches, interleavers, deinterleavers, modulators, demodulators, inputs, outputs, antennas, amplifiers, receiver units, transmitter units, DSPs, MSDs, TCM encoder, TCM decoder, power supply units, power feeders, communication interfaces, communication protocols, etc. which are suitably arranged together for performing the solution.

Furthermore, any method according to embodiments of the invention may be implemented in a computer program, having code means, which when run by processing means causes the processing means to execute the steps of the method. The computer program is included in a computer readable medium of a computer program product. The computer readable medium may comprise essentially any memory, such as previously mentioned a read-only memory (ROM), a programmable read-only memory (PROM), an erasable PROM (EPROM), a flash memory, an electrically erasable PROM (EEPROM), or a hard disk drive.

Finally, it should be understood that the invention is not limited to the embodiments described above, but also relates to and incorporates all embodiments within the scope of the appended independent claims.

## Claims

1. An arrangement (100) for determining control parameters for a control arrangement (200) configured to control a heating and/or a cooling system (400) of a building (300), the system (400) comprising a fluid source (410) coupled to a radiator (420) via a fluid feed system (430) and a fluid return system (440), the radiator (420) being arranged in a room (310) of the building (300); and wherein the arrangement (100) is configured to:
determine a set of control parameters (C₁) based on a set of outdoor temperatures of the building (300), a set of indoor temperatures of the room (310), a set of fluid feed temperatures of the fluid feed system (430), and a set of desired indoor temperatures for a first time period (T1).

2. The arrangement (100) according to claim 1, configured to
provide the set of control parameters (C₁) to a presentation device, and/or
provide the set of control parameters (C₁) to the control arrangement (200), and/or
control the control arrangement (200) based on the set of control parameters (C₁).

3. The arrangement (100) according to claim 1 or 2, configured to
determine the set of control parameters (C₁) further based on a set of predetermined control parameters (C_{P}) for the control arrangement (200).

4. The arrangement (100) according to claim 3, configured to
receive the set of predetermined control parameters (C_{P}) via a communication interface (110); and/or
estimate the set of predetermined control parameters (C_{P}) based on sets of sensor data.

5. The arrangement (100) according to any one of the preceding claims, configured to
obtain sets of sensor data associated with the set of outdoor temperatures, the set of indoor temperatures, and the set of fluid feed temperatures, respectively, for the first time period (T1); and
obtain the set of outdoor temperatures, the set of indoor temperatures, and the set of fluid feed temperatures for the first time period (T1) based on the set of sensor data.

6. The arrangement (100) according to claim 5, configured to
filter the sets of sensor data to obtain the set of outdoor temperatures, the set of indoor temperatures, and the set of fluid feed temperatures for the first time period (T1).

7. The arrangement (100) according to claim 6, configured to
discard sensor data in the sets of sensor data when a temperature derivate of the sensor data exceeds a temperature derivate threshold value.

8. The arrangement (100) according to any one of claims 5 to 7, configured to
arrange the sets of sensor data according to outdoor temperature ranges based on the amount of sensor data in the sets of sensor data.

9. The arrangement (100) according to claim 8, wherein the outdoor temperature ranges are any of 4K or 2K or 1K.

10. The arrangement (100) according to any one of the preceding claims, configured to
obtain a set of fluid return temperatures of the fluid return system (440) for the first time period (T1); and
determine the set of control parameters (C₁) further based on the set of fluid return temperatures for the first time period (T1).

11. The arrangement according to claim 10, configured to
determine the set of control parameters (C₁) based on a difference between the set of fluid feed temperatures and the set of fluid return temperatures.

12. The arrangement (100) according to any one of the preceding claims, configured to
determine a set of updated control parameters (C₂) based on a set of outdoor temperatures, a set of indoor temperatures, a set of fluid feed temperatures, and a set of desired indoor temperatures for a second time period (T2).

13. The arrangement (100) according to claim 12, configured to
determine the set of updated control parameters (C₂) for the second time period (T2) further based on the set of control parameters (C₁) for the first time period (T1).

14. The arrangement according to claim 13, wherein the determining of the set of updated control parameters (C₂) comprises correcting the fluid feed temperatures in the set of control parameters (C₁) based on observed fluid feed temperatures during the first time period (T1) and a correction function, wherein the correction function is based on the sets of sensor data obtained during the first time period (T1).

15. A method (500) for determining control parameters for a control arrangement (200) configured to control a heating and/or a cooling system (400) of a building (300), the system (400) comprising a fluid source (410) coupled to a radiator (420) via a fluid feed system (430) and a fluid return system (440), the radiator (420) being arranged in a room (310) of the building (300); and wherein the method (500) comprises:
determining (502) a set of control parameters (C₁) based on a set of outdoor temperatures of the building (300), a set of indoor temperatures of the room (310), a set of fluid feed temperatures of the fluid feed system (430), and a set of desired indoor temperatures for a first time period (T1).
